# EUROPÄISCHE PATENTSCHRIFT

(11) **EP 3 577 738 B1**
(45) Veröffentlichungstag und Bekanntmachung des Hinweises auf die Patenterteilung: **26.08.2026**
(21) Anmeldenummer: 18703957.3
(22) Anmeldetag: 02.02.2018
(51) Int. Cl.: H02J 3/38, H02J 3/16

(54) **VERFAHREN ZUM EINSPEISEN ELEKTRISCHER LEISTUNG IN EIN ELEKTRISCHES VERSORGUNGSNETZ**
METHOD FOR FEEDING ELECTRICAL POWER INTO AN ELECTRICAL SUPPLY NETWORK
PROCÉDÉ D'INJECTION DE PUISSANCE ÉLECTRIQUE DANS UN RÉSEAU DE DISTRIBUTION ÉLECTRIQUE

(30) Priorität: 02.02.2017 DE 102017102018
(43) Veröffentlichungstag der Anmeldung: 11.12.2019
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser
(86) Internationale Anmeldenummer: PCT/EP2018/052617
(87) Internationale Veröffentlichungsnummer: WO 2018/141892

(56) Entgegenhaltungen:
- EP-A1- 2 793 343
- EP-A1- 3 002 453
- EP-A1- 3 068 007
- WO-A2-2013/160486
- DE-A1- 102012 213 830

## Beschreibung

Die vorliegende Erfindung betrifft ein Verfahren zum Einspeisen elektrischer Leistung in ein elektrisches Versorgungsnetz. Weiterhin betrifft die vorliegende Erfindung einen Erzeuger elektrischer Energie, insbesondere eine Windenergieanlage, sowie einen Windpark, die jeweils zur Durchführung eines solchen Verfahrens eingerichtet sind.

Üblicherweise werden Erzeuger elektrischer Energie mit den elektrischen Verbrauchern des elektrischen Versorgungsnetzes im Parallelbetrieb betrieben.

Während dieses Betriebes kann die von dem Generator bereitgestellte elektrische Wirkleistung variieren. Dies hat zur Folge, dass auch die Netzspannung (U_{GRID}), beispielsweise am Netzanschlusspunkt des Erzeugers, schwanken kann.

Solche Schwankungen sind jedoch im Interesse eines sicheren Betriebs nur innerhalb sehr enger Grenzen zulässig.

WO 2013/160486 A2 betrifft einen Windpark mit einem Parkmaster und mehreren Windenergieanlagen, wobei die Windenergieanlagen jeweils eine lokale Regelung aufweisen, die von dem Parkmaster vorgegebene Sollwerte in Bezug auf die Blindleistung umsetzen.

Aufgabe der vorliegenden Erfindung ist es somit, zumindest eines der oben genannten Probleme zu adressieren. Insbesondere soll eine Lösung vorgeschlagen werden, die es ermöglicht, auch bei schwankender Wirkleistungseinspeisung Spannungsänderungen besser zu kontrollieren. Zumindest soll eine Alternative zu bisher bekannten Lösungen vorgeschlagen werden.

Erfindungsgemäß wird somit ein Verfahren zum Einspeisen elektrischer Leistung in ein elektrisches Versorgungsnetz gemäß Anspruch 1 vorgeschlagen. Das elektrische Versorgungsnetz weist dabei eine Netznennspannung auf und wird mit einer Netzspannung betrieben. Zudem weist die eingespeiste elektrische Leistung eine Wirkleistungs- und eine Blindleistungskomponente auf.

Eine Steuerung der Einspeisung der elektrischen Leistung erfolgt erfindungsgemäß durch den Phasenwinkel, wobei der Phasenwinkel den Winkel zwischen dem eingespeisten Strom und der Spannung der eingespeisten elektrischen Leistung beschreibt.

Der Phasenwinkel wird über eine Phasenwinkelsteuerung eingestellt, die eine Verzögerungsfunktion aufweist, die durch wenigstens eine Zeitkonstante gekennzeichnet ist.

Es wird somit eine Phasenwinkelsteuerung vorgeschlagen, um die Blindleistungskomponente der eingespeisten elektrischen Leistung zu steuern, wobei die Phasenwinkelsteuerung hierfür eine Verzögerungsfunktion aufweist.

Die Verzögerungsfunktion, die auch kurz als Verzögerung bezeichnet werden kann, weist hierfür wenigstens eine Zeitkonstante auf.

Die Phasenwinkelsteuerung reagiert somit nicht sofort auf Änderungen im elektrischen Versorgungsnetz, sondern eilt diesen zeitverzögert nach.

Durch die Verwendung der Zeitkonstanten wird insbesondere das Systemverhalten des Erzeugers in Bezug auf das elektrische Versorgungsnetz gedämpft. Kommt es nun beispielsweise zu einem Aufschwingen des elektrischen Versorgungsnetzes, wirkt der Erzeuger dämpfend auf diese Schwingung bzw. verstärkt diese nicht.

Das erfindungsgemäße Verfahren reagiert somit besonders schonend auf Netzstörungen bzw. Schwankung im elektrischen Versorgungsnetz.

Besonders vorteilhaft hierbei ist, dass insbesondere durch die wenigstens eine Zeitkonstante das sogenannte Überschwingen der Erzeuger, was als Reaktion auf Netzstörungen auftreten kann, minimiert wird.

Das erfindungsgemäße Verfahren ist somit besonders dazu vorgesehen wie folgt das elektrische Versorgungsnetz zu stützen: Ändert sich zunächst die Netzspannung transient, so bleibt die Stromeinspeisung im ersten Moment gleich, also wie vor der transienten Netzspannungsänderung. Bei einer Lastzuschaltung bei gleichzeitig untererregter Fahrweise der Windenergieanlage bzw. des Windparks, die bzw. der somit induktiv einspeist, springt die Phase an Anschlussklemmen der Windenergieanlage bzw. des Windparks zum Stromzeiger des eingespeisten Stroms hin. Durch Lastzuschaltung im elektrischen Versorgungsnetz, fällt die Versorgungsnetzspannung lokal normalerweise ab und die Frequenz im Netz sinkt. Durch die verzögerte Phasenwinkelsteuerung erhöht sich aber die Wirkleistungseinspeisung, um so die Frequenz des elektrischen Versorgungsnetzes zu stützten und gleichzeitig wird durch die verringerte untererregte Fahrweise der Windenergieanlage bzw. des Windparks die Spannung gestützt, weil der spannungssenkende untererregte Blindstrom, der eingespeist wird, reduziert wird. Springt die Phase vom Stromzeiger weg, bspw. durch Lastabschaltung im elektrischen Versorgungsnetz, steigt die Versorgungsnetzspannung an. Die vorgeschlagene verzögerte Phasenwinkelsteuerung vermindert aber die Wirkleistungseinspeisung, um so die Frequenz des elektrischen Versorgungsnetzes zu stützen und erhöht den induktiven Blindstrom, um den Spannungsanstieg zu verkleinern. Vorzugsweise verändert die Phasenwinkelsteuerung den Phasenwinkel in Abhängigkeit wenigstens einer im elektrischen Versorgungsnetz erfassten Netzspannung, insbesondere so, dass die Netzspannung auf einen vorgegebenen Spannungssollwert geregelt wird.

Der Phasenwinkel wird somit in Abhängigkeit der erfassten Netzspannung eingestellt. Hierzu kann die Netzspannung beispielsweise am Netzanschlusspunkt des Erzeugers erfasst werden.

Vorteilhaft ist, dass die Netzspannung, insbesondere an verschiedenen Stellen im elektrischen Versorgungsnetz, auf einfache Art und Weise erfasst werden kann und das Verfahren somit ohne hohen Aufwand in bereits bestehenden Erzeugern, insbesondere Windenergieanlage, implementiert werden kann.

Bevorzugt wird der Phasenwinkel dabei so eingestellt, dass er die Netzspannung auf einen vorgegebenen Spannungssollwert regelt. Hierfür ist der vorgegebene Spannungssollwert frei parametrierbar und wird besonders bevorzugt auf einen Wert in einem Bereich zwischen 105% bis 110% der Netznennspannung eingestellt. Der das Verfahren verwendende Erzeuger ist somit dazu eingerichtet, die Netzspannung an seinem Netzanschlusspunkt auf einen Wert oberhalb der Netznennspannung zu regeln.

Besonders vorteilhaft ist dabei, dass der Erzeuger, insbesondere der Windpark, die durch Einspeisung verursachte Spannungserhöhung am Netzanschlusspunkt selbst durch seine Blindleistungseinspeisung kompensiert.

Vorzugsweise wird der Phasenwinkel derart verändert, dass die Netzspannung an wenigstens einem vorgegeben Punkt im elektrischen Versorgungsnetz im Wesentlichen unverändert bleibt.

Der Phasenwinkel ist somit veränderbar, d.h. er variiert über die Zeit. Zudem wird der Phasenwinkel dabei so eingestellt, dass die Netzspannung an einem Punkt im elektrischen Versorgungsnetz im Wesentlichen konstant bleibt. Bevorzugt ist dieser Punkt der Netzanschlusspunkt des Erzeugers, der das erfindungsgemäße Verfahren ausführt. Beispielsweise ist der Erzeuger ein Windpark und der vorgegebene Punkt ist der Netzanschlusspunkt des Windparks. Der Phasenwinkel wird dann in Abhängigkeit der erfassten Netzspannung so variiert, dass die Netzspannung am Netzanschlusspunkt im Wesentlichen unverändert ist, beispielsweise 1,05 p.u. der Netznennspannung am Netzanschlusspunkt. Der Erzeuger speist somit eine elektrische Leistung, umfassend eine Blindleistungs- und eine Wirkleistungskomponente, derart am Netzanschlusspunkt ein, dass die Netzspannung am Netzanschluss konstant bleibt und im Wesentlichen einem vorgegebenen Spannungssollwert entspricht, beispielsweise 1,05 p.u. der Netznennspannung. Wenn also das elektrische Versorgungsnetz am Netzanschlusspunkt des Erzeugers eine Netznennspannung von 10 kV aufweist, speist der Erzeuger die elektrische Leistung derart ein, dass sich am Netzanschlusspunkt eine Netzspannung von 10,5 kV einstellt.

Das erfindungsgemäße Verfahren ermöglicht somit, einen Erzeuger elektrischer Energie, beispielsweise einen Windpark, so zu steuern, dass der Windpark die Netzspannung im elektrischen Versorgungsnetz an einem beliebigen, vorgebbaren Punkt im elektrischen Versorgungsnetz stützt bzw. stabil hält.

In einer besonders bevorzugten Ausführungsform ist der vorgegebene Punkt der Netzanschlusspunkt und die Netzspannung wird ebenfalls am Netzanschlusspunkt des Erzeugers erfasst.

Vorzugsweise wird der Phasenwinkel in Abhängigkeit einer Sollspannung verändert und die Sollspannung in einem Bereich von 105% bis 110% der Netznennspannung vorgegeben wird.

Der Phasenwinkel wird somit in Abhängigkeit einer Sollspannung verändert, wobei die Sollspannung, also ein Spannungssollwert, größer ist als die Netznennspannung.

Es wurde nämlich erfindungsgemäß erkannt, dass eine solche Wahl der Sollspannung, oberhalb der Netznennspannung das elektrische Versorgungsnetz ebenfalls entlastet, genauso wie das Nachführen des Phasenwinkels, also die erfindungsgemäße Verzögerungsfunktion. Hierdurch ergeben sich insbesondere synergetische Effekte in Bezug auf das Schwingungsverhalten des elektrischen Versorgungsnetzes. Insbesondere können hierdurch im Versorgungsnetz auftretende Netzpendelungen stärker gedämpft werden als bisher üblich, insbesondere so, dass die Gefahr eines *system split* oder eines *blackout* weiter minimiert wird. Eine solche Eigenschaft ist insbesondere in Bezug auf schwache elektrische Versorgungsnetze, wie beispielsweise in Brasilien, wünschenswert. Besonders können damit auch subsynchrone Schwingungsresonanzen, die auch als genannte SSR-Schwingungen bezeichnet werden, gedämpft werden. SSR-Schwingungen sind Schwingungen mit einer Frequenz, die niedriger ist, als die Netzfrequenz, bspw. 30Hz bei einer Netzfrequenz von 50Hz. Durch die vorgeschlagene verzögerte Nachführung ist eine solche Regelschwingung mit der Serienresonanz nicht ohne weiteres möglich, weil die Verzögerung der Phasenwinkelregelung das verhindert.

Erfindungsgemäß wird die wenigstens eine Zeitkonstante zur Veränderung der Verzögerungsfunktion variiert.

Die Zeitkonstante ist somit veränderbar. Insbesondere kann die Zeitkonstante im laufenden Betrieb verändert und somit an die vorherrschenden Netzbedingungen bzw. an den vorherrschenden Netzzustand angepasst werden. Beispielsweise ist die Zeitkonstante während eines sehr stabilen Netzzustandes kleiner eingestellt als bei einem weniger stabilen Netzzustand. Die Zeitkonstante wird somit bevorzugt dem Netzzustand bzw. dem vorherrschenden Netzzustand angepasst.

Vorzugsweise ist die Verzögerungsfunktion oder die wenigstens eine Zeitkontante zur Veränderung der Verzögerung über einen Adaptionsalgorithmus veränderbar, wobei die Adaption insbesondere in Abhängigkeit eines Netzzustandes durchgeführt wird.

Die Verzögerungsfunktion oder die wenigstens eine Zeitkonstante werden somit im laufenden Betrieb mittels einer Adaption bzw. eines Adaptionsalgorithmus angepasst bzw. eingestellt. Die Adaption erfolgt dabei bevorzugt in Abhängigkeit eines Netzzustandes, beispielsweise in Abhängigkeit der erfassten Netzspannung. Die Zeitkonstante wird beispielsweise in Abhängigkeit der Abweichung der erfassten Netzspannung von der Netznennspannung eingestellt.

Gemäß einer Ausführungsform wird vorgeschlagen, dass die Einstellung oder Variation der Verzögerungsfunktion, sei es durch einen Adaptionsalgorithmus oder anderweitig, in Abhängigkeit der Netzsensitivität erfolgt. Die Netzsensitivität kann dabei als Verhältnis einer Spannungsänderung an dem Netzanschlusspunkt auf eine Änderung der Wirkleistungseinspeisung am Netzanschlusspunkt beschrieben werden.

Vorzugsweise weist die Phasenwinkelsteuerung ein proportionales Übertragungsverhalten auf, so dass die Phasenwinkelsteuerung einen Phasenwinkel proportional zu einer Spannungsabweichung vorgibt, und die Verzögerungsfunktion weist eine Übertragungsfunktion 1. Ordnung, 2. Ordnung oder höherer Ordnung auf, insbesondere eine lineare Übertragungsfunktion.

Die Phasenwinkelsteuerung weist somit ein proportionales Verhalten auf. Dies kann beispielsweise mittels der Verwendung eines P-Reglers erreicht werden. Hierfür wird insbesondere die Spannungsabweichung, also die Abweichung der erfassten Netzspannung von der Netznennspannung oder die Abweichung der erfassten Netzspannung von einem vorgegebenen Spannungssollwert, verwendet.

Durch die erfindungsgemäße Zeitkonstante und das proportionale Verhalten der Phasenwinkelsteuerung reagiert die Phasenwinkelsteuerung besonders schonend auf Netzstörungen. Zur Realisierung einer solchen Phasenwinkelsteuerung werden bevorzugt PT-1- oder PT2-Glieder verwendet, also Verzögerungsfunktionen 1. bzw. 2. Ordnung, die insbesondere eine lineare Übertragungsfunktion bilden.

Es wurde nämlich erkannt, dass die Verwendung von reinen I-Gliedern in Bezug auf die Netzstabilität nachteilig sein kann.

Vorzugsweise wird die wenigstens eine Zeitkonstante zur Veränderung der Verzögerung von extern vorgegeben, insbesondere durch einen Betreiber des elektrischen Versorgungsnetzes.

Die wenigstens eine veränderbare Zeitkonstante kann somit jederzeit vom Netzbetreiber vorgegeben werden. Der Netzbetreiber kann somit das Verhalten der Phasenwinkelsteuerung selbst einstellen, indem er die Zeitkonstante selbst verändert.

Dies ist besonders vorteilhaft in kritischen Netzsituationen, beispielsweise im Falle eines Netzwiederaufbaus. Hier kann es beispielsweise wünschenswert sein, dass die Phasenwinkelsteuerung eine besonders harte Regelcharakteristik aufweist. Der Netzbetreiber kann die Zeitkonstante dann entsprechend dieser Anforderung einstellen.

Vorzugsweise weist die Phasenwinkelsteuerung ein nichtlineares Übertragungsverhalten auf oder die Phasenwinkelsteuerung weist ein Übertragungsverhalten auf, welches durch eine Polynom-Funktion höherer Ordnung, bevorzugt wenigstens 3. Ordnung, abbildbar ist. Dadurch kann eine Amplitudenabhängigkeit der Phasenwinkelsteuerung erreicht werden, so dass bspw. für höhere Spannungsabweichungen eine stärkere Verstärkung erreicht werden kann.

Ein nichtlineares Verhalten kann beispielsweise durch eine Polynom-Funktion höherer Ordnung in der Phasenwinkelsteuerung implementiert werden.

Vorzugsweise führt die Phasenwinkelsteuerung den Phasenwinkel in Abhängigkeit einer Netzsituation des elektrischen Versorgungsnetzes nach, insbesondere in Abhängigkeit der Netzsensitivität des elektrischen Versorgungsnetzes nach.

Es wird somit vorgeschlagen die Phasenwinkelsteuerung adaptiv auszuführen, insbesondere so, dass dabei das elektrische Versorgungsnetz bzw. eine vorherrschende Netzsituation des elektrischen Versorgungsnetzes berücksichtigt wird.

Bspw. ist das elektrische Versorgungsnetz schwach ausgebildet, d.h. es gibt nur wenige Erzeuger und Verbraucher. In einem solchen Fall hätte die Phasenwinkelsteuerung einen großen Einfluss auf das Verhalten des elektrischen Versorgungsnetzes. Genau für solche, insbesondere speziellen, Netzsituationen wird nun vorgeschlagen, die Netzsituation entsprechend bei der Steuerung des Phasenwinkels zu berücksichtigen.

Besonders bevorzugt wird vorgeschlagen, dass der Phasenwinkel in Abhängigkeit der Netzsensitivität nachgeführt wird. Die Netzsensitivität wird dabei ferner bevorzugt als Änderung der Spannung des elektrischen Versorgungsnetzes zu einer Änderung der eingespeisten Wirkleistung angegeben. Die Phasenwinkelsteuerung weist somit bevorzugt ein nichtlineares Übertragungsverhalten auf.

Beispielhaft wird zudem ein Erzeuger elektrischer Energie, insbesondere eine Windenergieanlage, vorgeschlagen, umfassend eine Erzeugereinheit zum Erzeugen einer elektrischen Leistung, die eine Phasenwinkelsteuerung aufweist, die dazu eingerichtet ist, ein vorstehend oder nachstehend beschriebenes Verfahren auszuführen.

Die Windenergieanlage bzw. der Erzeuger umfasst eine Erzeugereinheit zum Erzeuger einer elektrischen Leistung, beispielsweise einen Leistungswechselrichter. Der Leistungswechselrichter wiederum weist eine Ansteuerung auf, die eine Phasenwinkelsteuerung umfasst, wobei die Phasenwinkelsteuerung eine erfindungsgemäße Verzögerungsfunktion aufweist.

Hierdurch ist es möglich, dass die Windenergieanlage besonders schonend an der Netzregelung teilnehmen. Eine Windenergieanlage ist dazu besonders gut geeignet, weil sie einen Erzeuger bildet, der sehr schnell seine eingespeiste Leistung nach Höhe und Art verändern kann. Er kann damit sehr schnell regeln und reagieren und daher ist eine Verzögerung aktiv vorgebbar und einstellbar weil eine Windenergieanlage kein nennenswert, physikalisch bedingtes eigene Verzögerungsverhalten aufweist.

Erfindungsgemäß wird ferner ein Windpark vorgeschlagen, umfassend wenigstens zwei Windenergieanlagen und eine Windparksteuereinheit, wobei die Windparksteuereinheit eine Phasenwinkelsteuerung aufweist, die dazu eingerichtet ist, ein vorstehend oder nachstehend beschriebenes Verfahren auszuführen.

In einer besonders bevorzugten Ausführungsform wird die die erfindungsgemäße Verzögerungsfunktion umfassende Phasenwinkelsteuerung in einer Windparksteuereinheit implementiert.

Hierdurch werden mehrere Windenergieanlagen zu einem Erzeuger elektrischer Energie zusammengefasst, wobei der Erzeuger das erfindungsgemäße Verhalten aufweist. Insbesondere ist die Verzögerungsfunktion in der Windparksteuereinheit implementiert. Auch ein Windpark kann im Grunde so schnell reagieren, wie eine Windenergieanlage und daher ist der Windpark auch gut für die Umsetzung der vorstehend beschriebenen Verfahren geeignet, wie schon zur Windenergieanlage erläutert wurde.

Die vorliegende Erfindung wird nun nachfolgend exemplarisch anhand von Ausführungsbeispielen unter Bezugnahme auf die begleitenden Figuren näher erläutert.
- Fig. 1: zeigt schematisch eine perspektivische Ansicht einer erfindungsgemäßen Windenergieanlage,
- Fig. 2: zeigt schematisch einen Aufbau eines erfindungsgemäßen Windparks und
- Fig. 3: zeigt schematisch den Aufbau einer Phasenwinkelsteuerung in einer besonders bevorzugten Ausführungsform.

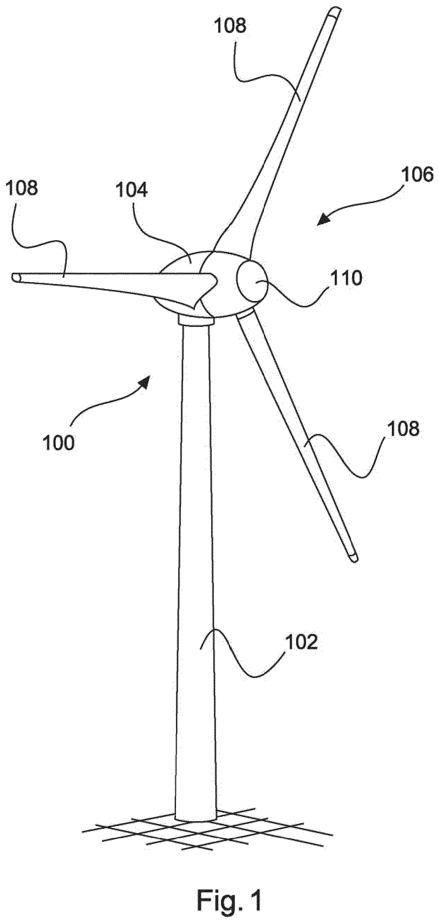

Fig. 1 zeigt eine Windenergieanlage 100 umfassend eine Erzeugereinheit zum Erzeugen einer elektrischen Leistung, die eine Phasenwinkelsteuerung aufweist, die mittels einer Phasenwinkelsteuerung, die eine Verzögerungsfunktion aufweist, die durch wenigstens eine Zeitkonstante gekennzeichnet ist, dazu eingerichtet ist, ein vorstehend oder nachstehend beschriebenes Verfahren auszuführen.

Die Windenergieanlage weist einen Turm 102 und eine Gondel 104 auf. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

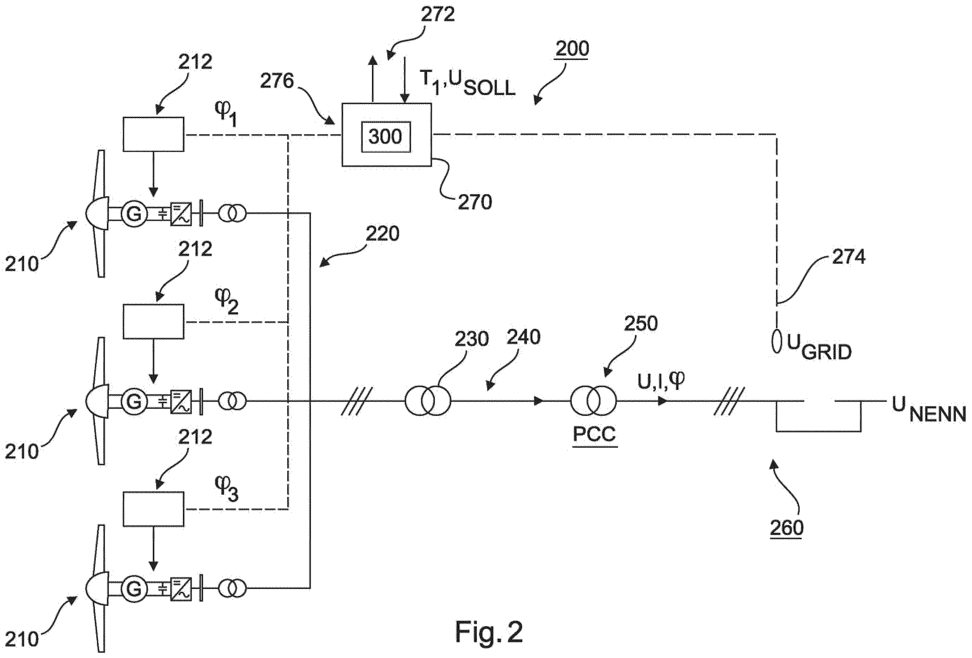

Fig. 2 zeigt einen Aufbau eines erfindungsgemäßen Windparks 200. Der Windpark 200 weist exemplarisch drei baugleiche Windenergieanlagen 210 auf, die über ein Windparknetz 220 miteinander verbunden sind. Die Windenergieanlagen 210 umfassen eine Windenergieanlagensteuereinheit 212 und erzeugen jeweils eine elektrische Leistung umfassend eine Blindleistungskomponente, die über das Windparknetz 220 mittels eines Windparktransformators 230, einer Zuleitung 240 und einem Netztransformator 250 an einem Netzanschlusspunkt PCC in das elektrische Verteilnetz 260 eingespeist wird.

Der Windpark 200 weist eine Windparksteuereinheit 270 auf. Die Windparksteuereinheit 270 weist eine Phasenwinkelsteuerung 300 auf, um den Phasenwinkel φ, der den Winkel zwischen dem Strom I und der Spannung U der eingespeisten elektrischen Leistung beschreibt, einzustellen. Hierzu weist die Phasenwinkelsteuerung 300 eine Verzögerungsfunktion auf, die durch wenigstens eine Zeitkonstante T1 gekennzeichnet ist.

Mittels der Kommunikationsschnittstelle 272 kann die wenigstens eine Zeitkonstante T1 von extern eingestellt werden, beispielsweise durch den Netzbetreiber. Auch kann über die Kommunikationsschnittstelle 272 die Sollspannung vorgeben werden, insbesondere in einem Bereich von 105% bis 110% der Netznennspannung U_{NENN}.

Ferner weist die Windparksteuereinheit 270 eine Messeinrichtung 274 zum Erfassen der Netzspannung U_{GRID} sowie eine Steuerschnittstelle 276 zum Steuern der Windenergieanlagen 210 auf. Insbesondere können über die Steuerschnittstelle 276 die von der Phasenwinkelsteuerung 300 berechneten Phasenwinkel φ1, φ2, φ3 an die Windenergieanlage 210 übergeben werden.

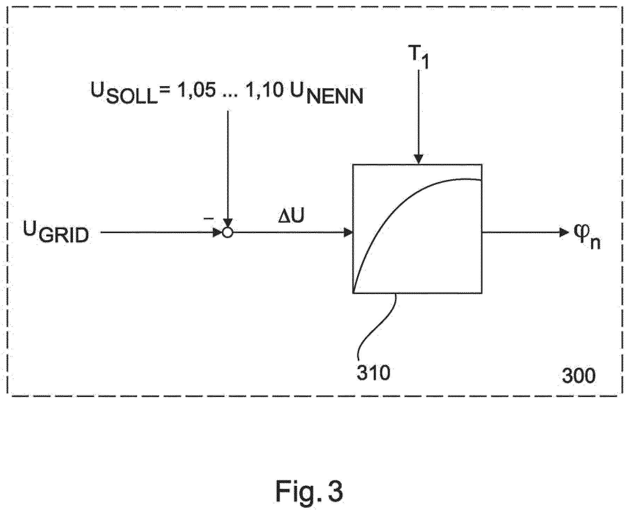

Fig. 3 zeigt schematisch den Aufbau einer Phasenwinkelsteuerung 300 in einer besonders bevorzugten Ausführungsform.

Die Phasenwinkelsteuerung 300 weist eine Verzögerungsfunktion 1. Ordnung auf und bildet somit eine Übertragungsfunktion 1. Ordnung aus. Die Verzögerungsfunktion 310 weist eine Zeitkonstante T1 auf, die von extern vorgegeben wird. Dies kann beispielsweise durch den Netzbetreiber erfolgen. Der Netzbetreiber wiederum kann zur Veränderung der Verzögerung bzw. zur Einstellung der Zeitkonstante T1 einen Adaptionsalgorithmus verwenden.

Als Eingangsgrößen ΔU zum Einstellen des Phasenwinkels φ_{N} werden die erfasste Netzspannung U_{GRID} und eine Sollspannung U_{SOLL} verwendet, wobei die Sollspannung U_{SOLL} in einem Bereich von 105% bis 110% der Netznennspannung vorgegeben wird. Die Vorgabe kann dabei ebenfalls vom Netzbetreiber oder durch den Erzeuger selbst erfolgen.

Die Eingangsgröße ΔU ist somit eine Regelabweichung, nämlich die Differenz aus erfasster Netzspannung U_{GRID} und vorgegebener Sollspannung U_{SOLL}.

Der Phasenwinkel φ_{N} wird somit aus der Regelabweichung ΔU bestimmt, wobei der Phasenwinkel φ_{N} ein verzögerter Phasenwinkel ist.

Der Phasenwinkel φ_{N} wird dann an die entsprechenden Steuereinheiten der Erzeuger übergeben. Der Phasenwinkel φ_{N} wird somit derart verändert, dass die Netzspannung an wenigstens einem vorgegebenen Punkt im elektrischen Versorgungsnetz im Wesentlichen unverändert bleibt.

## Patentansprüche

1. Verfahren zum Einspeisen elektrischer Leistung in ein eine Netznennspannung (U_{NENN}) aufweisendes elektrisches Versorgungsnetz, das mit einer Netzspannung (U_{GRID})betrieben wird, wobei die eingespeiste elektrische Leistung eine Blindleistungskomponente aufweist, die durch einen Phasenwinkel (φ) vorgegeben wird, der einen Winkel zwischen einem Strom (I) und einer Spannung (U) der eingespeisten elektrischen Leistung beschreibt, wobei der Phasenwinkel über eine Phasenwinkelsteuerung (300) eingestellt wird, die eine Verzögerungsfunktion (310) aufweist, die durch wenigstens eine Zeitkonstante (T1) **gekennzeichnet ist, dadurch** gekennzeichnet, dass die wenigstens eine Zeitkonstante zur Veränderung der Verzögerungsfunktion (310) variiert wird.

2. Verfahren nach Anspruch 1, **dadurch gekennzeichnet, dass**
- die Phasenwinkelsteuerung (300) den Phasenwinkel in Abhängigkeit wenigstens einer im elektrischen Versorgungsnetz erfassten Netzspannung (U_{GRID}) verändert, insbesondere so, dass die Netzspannung (U_{GRID}) auf einen vorgegebenen Spannungssollwert geregelt wird.

3. Verfahren nach Anspruch 1 oder 2, **dadurch gekennzeichnet, dass**
- der Phasenwinkel derart verändert wird, dass die Netzspannung (U_{GRID}) an wenigstens einem vorgegeben Punkt im elektrischen Versorgungsnetz im Wesentlichen unverändert bleibt.

4. Verfahren nach einem der vorstehenden Ansprüche, **dadurch gekennzeichnet, dass**
- der Phasenwinkel in Abhängigkeit einer Sollspannung (U_{SOLL}) verändert wird,
und die Sollspannung (U_{SOLL}) in einem Bereich von 105% bis 110% der Netznennspannung (U_{NENN}) vorgegeben wird.

5. Verfahren nach einem der vorstehenden Ansprüche, **dadurch gekennzeichnet, dass**
- die wenigstens eine Zeitkonstante zur Veränderung der Verzögerungsfunktion (310) in Abhängigkeit eines Netzzustandes und/oder einer Netzsensitivität variiert wird.

6. Verfahren nach einem der vorstehenden Ansprüche, **dadurch gekennzeichnet, dass**
- die Verzögerungsfunktion (310) oder die wenigstens eine Zeitkontante zur Veränderung der Verzögerung über einen Adaptionsalgorithmus veränderbar ist, wobei die Adaption insbesondere in Abhängigkeit eines Netzzustandes und/oder einer Netzsensitivität durchgeführt wird.

7. Verfahren nach einem der vorstehenden Ansprüche, **dadurch gekennzeichnet, dass**
- die Phasenwinkelsteuerung (300) ein proportionales Übertragungsverhalten aufweist, so dass die Phasenwinkelsteuerung (300) einen Phasenwinkel proportional zu einer Spannungsabweichung vorgibt, und
- die Verzögerungsfunktion (310) eine Übertragungsfunktion 1. Ordnung, 2. Ordnung oder höherer Ordnung aufweist, insbesondere eine lineare Übertragungsfunktion.

8. Verfahren nach einem der vorstehenden Ansprüche, **dadurch gekennzeichnet, dass**
- die wenigstens eine Zeitkonstante zur Veränderung der Verzögerung von extern vorgegeben wird, insbesondere durch einen Betreiber des elektrischen Versorgungsnetzes.

9. Verfahren nach einem der vorstehenden Ansprüche, **dadurch gekennzeichnet, dass**
- die Phasenwinkelsteuerung (300) ein nichtlineares Übertragungsverhalten aufweist oder
- die Phasenwinkelsteuerung (300) ein Übertragungsverhalten aufweist, welches durch eine Polynom-Funktion höherer Ordnung, bevorzugt wenigstens 3. Ordnung, abbildbar ist.

10. Verfahren nach einem der vorstehenden Ansprüche, **dadurch gekennzeichnet, dass**
- die Phasenwinkelsteuerung den Phasenwinkel in Abhängigkeit einer Netzsituation des elektrischen Versorgungsnetzes nachführt, insbesondere in Abhängigkeit der Netzsensitivität des elektrischen Versorgungsnetzes nachführt.

11. Windpark (200) umfassend wenigstens zwei Windenergieanlagen (210) und eine Windparksteuereinheit (270), wobei die Windparksteuereinheit (270) eine Phasenwinkelsteuerung (300) aufweist, die dazu eingerichtet ist, ein Verfahren nach einem der Ansprüche 1 bis 10 auszuführen.

## Claims

1. A method for supplying electric power to an electrical supply grid that has a grid rated voltage (U_{RATED}) and is operated at a grid voltage (U_{GRID}), wherein the supplied electric power has a reactive power component that is prescribed by a phase angle (φ) describing an angle between a current (I) and a voltage (U) of the supplied electric power, wherein the phase angle is set by means of phase angle control (300) that has a delay function (310) **characterized by** at least one time constant (T1), **characterized in that**,
the at least one time constant for modifying the delay function (310) is varied.

2. The method as claimed in claim 1, **characterized in that**
- the phase angle control (300) alters the phase angle on the basis of at least one grid voltage (U_{GRID}) recorded in the electrical supply grid, in particular such that the grid voltage (U_{GRID}) is regulated to a prescribed voltage setpoint value.

3. The method as claimed in claim 1 or 2, **characterized in that**
- the phase angle is altered such that the grid voltage (U_{GRID}) remains substantially unaltered at at least one prescribed point in the electrical supply grid.

4. The method as claimed in one of the preceding claims, **characterized in that**
- the phase angle is altered on the basis of a setpoint voltage (U_{SETPOINT}), and the setpoint voltage (U_{SETPOINT}) is prescribed in a range from 105% to 110% of the grid rated voltage (U_{RATED}).

5. The method as claimed in one of the preceding claims, **characterized in that**
- the at least one time constant is varied to alter the delay function (310) on the basis of a grid state and/or a grid sensitivity.

6. The method as claimed in one of the preceding claims, **characterized in that**
- the delay function (310) or the at least one time constant is alterable by means of an adaptation algorithm to alter the delay, wherein the adaptation is performed in particular on the basis of a grid state and/or a grid sensitivity.

7. The method as claimed in one of the preceding claims, **characterized in that**
- the phase angle control (300) has a proportional response characteristic, so that the phase angle control (300) prescribes a phase angle in proportion to a voltage deviation, and
- the delay function (310) has a 1^{st} order, 2^{nd} order or higher order transfer function, in particular a linear transfer function.

8. The method as claimed in one of the preceding claims, **characterized in that**
- the at least one time constant is prescribed externally to alter the delay, in particular by an operator of the electrical supply grid.

9. The method as claimed in one of the preceding claims, **characterized in that**
- the phase angle control (300) has a non-linear response characteristic or
- the phase angle control (300) has a response characteristic mappable by a higher order, preferably at least 3^{rd} order, polynomial function.

10. The method as claimed in one of the preceding claims, **characterized in that**
- the phase angle control tracks the phase angle on the basis of a grid situation of the electrical supply grid, in particular tracks it on the basis of the grid sensitivity of the electrical supply grid.

11. A wind farm (200) comprising at least two wind power installations (210) and a wind farm control unit (270), wherein the wind farm control unit (270) has phase angle control (300), configured to carry out a method as claimed in one of claims 1 to 10.

## Revendications

1. Procédé d'injection de puissance électrique dans un réseau d'alimentation électrique présentant une tension nominale de réseau (U_{NENN}), qui fonctionne avec une tension de réseau (U_{GRID}), dans lequel la puissance électrique injectée présente une composante de puissance réactive qui est prédéfinie par un angle de phase (φ) qui est un angle entre un courant (I) et une tension (U) de la puissance électrique injectée, dans lequel l'angle de phase est réglé par l'intermédiaire d'une commande d'angle de phase (300), qui présente une fonction de décalage (310), qui est **caractérisée par** au moins une constante de temps (T1), **caractérisé en ce que** l'au moins une constante de temps varie pour modifier la fonction de retard (310).

2. Procédé selon la revendication 1, **caractérisé en ce que**
- la commande d'angle de phase (300) modifie l'angle de phase en fonction d'au moins une tension de réseau (U_{GRID}) détectée dans le réseau d'alimentation électrique, en particulier de telle sorte que la tension de réseau (U_{GRID}) est régulée sur une valeur de consigne de tension prédéfinie.

3. Procédé selon la revendication 1 ou 2, **caractérisé en ce que**
- l'angle de phase est modifié de telle manière que la tension de réseau (U_{GRID}) reste sensiblement inchangée sur au moins un point prédéfini dans le réseau d'alimentation électrique.

4. Procédé selon l'une quelconque des revendications précédentes, **caractérisé en ce que**
- l'angle de phase est modifié en fonction d'une tension de consigne (U_{SOLL}) et la tension de consigne (U_{SOLL}) est prédéfinie dans une plage de 105 % à 110 % de la tension nominale de réseau (U_{NENN}).

5. Procédé selon l'une quelconque des revendications précédentes, **caractérisé en ce que**
- l'au moins une constante de temps varie pour modifier la fonction de retard (310) en fonction d'un état de réseau et/ou d'une sensibilité de réseau.

6. Procédé selon l'une quelconque des revendications précédentes, **caractérisé en ce que**
- la fonction de retard (310) ou l'au moins une constante de temps peut être modifiée pour modifier le retard par l'intermédiaire d'un algorithme d'adaptation, dans lequel l'adaptation est réalisée en particulier en fonction d'un état de réseau et/ou d'une sensibilité de réseau.

7. Procédé selon l'une quelconque des revendications précédentes, **caractérisé en ce que**
- la commande d'angle de phase (300) présente un comportement de transmission proportionnel de telle sorte que la commande d'angle de phase (300) prédéfinit un angle de phase proportionnellement à un écart de tension, et
- la fonction de retard (310) présente une fonction de transmission d'ordre 1, d'ordre 2, ou d'ordre supérieur, en particulier une fonction de transmission linéaire.

8. Procédé selon l'une quelconque des revendications précédentes, **caractérisé en ce que**
- l'au moins une constante de temps est prédéfinie de manière externe pour modifier le retard, en particulier par un exploitant du réseau d'alimentation électrique.

9. Procédé selon l'une quelconque des revendications précédentes, **caractérisé en ce que**
- la commande d'angle de phase (300) présente un comportement de transmission non linéaire ou
- la commande d'angle de phase (300) présente un comportement de transmission qui, par une fonction polynomiale d'ordre supérieur, de préférence au moins d'ordre 3, peut être reproduit.

10. Procédé selon l'une quelconque des revendications précédentes, **caractérisé en ce que**
- la commande d'angle de phase suit l'angle de phase en fonction d'une situation de réseau du réseau d'alimentation électrique, en particulier en fonction de la sensibilité de réseau du réseau d'alimentation électrique.

11. Parc éolien (200) comprenant au moins deux éoliennes (210) et une unité de commande de parc éolien (270), dans lequel l'unité de commande de parc éolien (270) présente une commande d'angle de phase (300) qui est mise au point pour exécuter un procédé selon l'une quelconque des revendications 1 à 10.
